# EUROPÄISCHE PATENTSCHRIFT

(11) **EP 1 903 249 B1**
(45) Veröffentlichungstag und Bekanntmachung des Hinweises auf die Patenterteilung: **12.08.2009**
(21) Anmeldenummer: 07018271.2
(22) Anmeldetag: 18.09.2007
(51) Int. Cl.: F16D 66/02

(54) **Sensor zur Erfassung des Verschleisses eines Bremsbelages einer Bremsanlage eines Fahrzeuges**
Sensor for detecting wear on the braking pad of a braking unit in a vehicle
Capteur de détermination de l'usure d'une garniture de frein d'un véhicule

(30) Priorität: 22.09.2006 DE 102006044909
(43) Veröffentlichungstag der Anmeldung: 26.03.2008
(73) Patentinhaber: Hirschmann Automotive GmbH, 6830 Rankweil-Brederis (AT)
(72) Erfinder: Dobler, Daniel, 6800 Feldkirch (AT)
(74) Vertreter: Dietrich, Barbara

(56) Entgegenhaltungen:
- EP-A- 0 992 702
- WO-A-20/04015296
- DE-A1- 10 321 595
- DE-C1- 3 905 190
- DE-C1- 3 915 996
- US-B1- 6 477 893

## Beschreibung

Die Erfindung betrifft einen Sensor zur Erfassung des Verschleißes eines Bremsbelages einer Bremsanlage eines Fahrzeuges, wobei der in dem Bremsbelag eingebaute Sensor von einer Bremsscheibe der Bremsanlage abgerieben wird, gemäß den Merkmalen des Oberbegriffes des Patentanspruches 1.

Ein solcher Sensor ist beispielsweise aus der DE 10 2005 009 123.7 bekannt. Er besteht im Wesentlichen aus einem Stanzgitter, auf dem Widerstände kontaktiert sind und die einen Stromkreis bilden, wobei das gesamte Gebilde (Stanzgitter mit Widerständen und angeschlossenen Leitungen) von einem Gehäuse umgeben ist. Das Gehäuse wird bei diesem Ausführungsbeispiel in einem Kunststoff-Spritzgussverfahren hergestellt. Der fertige Sensor wird an geeigneter Stelle in die Bremsanlage des Fahrzeuges eingebaut und bei Betrieb des Fahrzeuges von der Bremsscheibe bzw. dem Andrücken des Bremsbelages auf die Bremsscheibe abgerieben, so dass das einen Stromkreis bildende Stanzgitter abgeschliffen wird und sich der zumindest eine Stromkreis öffnet, aus dem eine sprunghafte Widerstandsänderung resultiert, die von einer nachgeschalteten Auswerte-Elektronik erfasst werden kann. Diese sprunghafte Widerstandsänderung führt zu einer Anzeige für die Bedienperson (Fahrer) des Fahrzeuges, dass der Abrieb des Bremsbelages ein Maß erreicht hat, das innerhalb eines bestimmten Zeitraumes einen Wechsel des Bremsbelages erfordert, um die Funktionstüchtigkeit der Bremsanlage in dem Fahrzeug sicher zu stellen.

Ein solcher bekannter Bremsbelagverschleißsensor hat allerdings mehrere Nachteile. Zum einen ist es sehr aufwändig, nach der Herstellung des Stanzgitters die Widerstände auf diesem Stanzgitter zu befestigen und elektrisch zu kontaktieren. Ein weiterer Nachteil ist daran zu sehen, dass das Kunststoff-Spritzgussverfahren zur Herstellung des Gehäuses bei sehr hohen Temperaturen durchgeführt werden muss, die einen schädlichen Einfluss auf die Widerstände bzw. deren Kontaktstellen an dem Stanzgitter haben kann. Außerdem herrschen bei Betrieb der Bremsanlage in dem Fahrzeug hohe Temperaturen, wenn der Bremsbelag gegen die Bremsscheibe gedrückt wird, so dass hier die gleichen Probleme wie bei der Herstellung des Gehäuses im Kunststoff-Spritzgussverfahren auftreten. Außerdem können nur diskontinuierliche (sich sprunghaft ändernde) Ausgangssignale, nicht aber kontinuierliche Ausgangssignale erzeugt werden.

Die US-B1-6,477,893 zeigt einen gattungsgemäßen Sensor zur Erfassung des Verschleißes eines Bremsbelages einer Bremsanlage eines Fahrzeuges, wobei der in dem Bremsbelag eingebaute Sensor von einer Bremsscheibe der Bremsanlage abgerieben wird und zwischen zwei seitlich angeordneten, aus einem elektrisch leitfähigen Material bestehenden Träger zumindest ein aus einem Widerstandsmaterial bestehender Block vorgebbarer Größe angeordnet ist, wobei der Block mit den Trägern verbunden und elektrisch leitend kontaktiert ist

Der Erfindung liegt daher die Aufgabe zu Grunde, einen verbesserten Sensor zur Erfassung des Verschleißes eines Bremsbelages einer Bremsanlage eines Fahrzeuges bereitzustellen.

Diese Aufgabe ist durch die Merkmale des Patentanspruches 1 gelöst.

Erfindungsgemäß ist vorgesehen, dass der Block und/oder die Träger von einem gespritzten hochgefüllten und elektrisch leitfähigen Kunststoff gebildet ist. An die beiden Träger, die einen elektrischen Anschluss (Kontaktierung) bilden, wird eine Spannung angelegt (bzw. ein Strom eingespeist, so dass sie zusammen mit dem Block aus einem Widerstandsmaterial einen Widerstand bilden. Dabei sind die beiden Träger und der zumindest eine Block mechanisch miteinander verbunden und elektrisch leitend kontaktiert, wobei die Verbindung und die Kontaktierung in zwei voneinander getrennten Prozessschritten oder in einem einzigen gemeinsamen Prozessschritt erzielt werden kann. Dieser Prozess kann beispielsweise ein Schweißprozess oder ein Lötprozess sein, wobei auch das Auftragen einer Widerstandsschicht (die den Träger bildet) auf den Block, ein Kleben der Träger an den Block oder auch eine direkte Umspritzung der Träger auf den Block (oder umgekehrt) erfolgen kann. Besonders vorteilhaft ist es, wenn der Block und/oder die Träger von einem gespritzten, hoch gefüllten und elektrisch leitfähigen Kunststoff gebildet sind, da in einem einzigen Arbeitsschritt die beteiligten Elemente (Block und Träger) hergestellt, miteinander kontaktiert und elektrisch verbunden werden können.

Der Block zwischen den Trägern bildet als Funktionsschicht über die Anbindung des Trägerwerkstoffes eine Widerstand, der sich durch Veränderung des Volumens bzw. der geometrischen Abmessung auf Grund der Einwirkung der Bremsscheibe, wenn der Bremsbelag gegen diese gedrückt und abgerieben wird, ändert. Die Änderung des Widerstandes kann zu einem Messsignal ausgewertet werden.

Der Block aus einem Widerstandsmaterial in vorgebbarer Größe ermöglicht über die Veränderung der geometrischen Abmessung, die auf die Anwendung innerhalb der Bremsanlage abgestimmt werden muss, die stufenlose Darstellung des Bremsbelagverschleißes. Das heißt, dass mit zunehmendem Abrieb des Bremsbelages auch zumindest der Block vorgebbarer Größe aus Widerstandsmaterial weiter abgerieben wird, wobei im Gegensatz zu bekannten Sensoren zur Erfassung des Verschleißes von Bremsbelägen ein kontinuierliches Ausgangssignal als Maß für den Bremsbelagverschleiß gewonnen werden kann. Dieses Ausgangssignal, das heißt der gewonnene Meßwert, muss nicht linear sein, sondern kann von Fall zu Fall an die Anforderung an die Darstellung des Bremsbelagverschleißes angepaßt werden. Hier kommt beispielsweise durch die geometrische Ausgestaltung des Blockes eine lineare, exponentielle oder auch eine spezielle Kurvenform in Betracht. Zum Beispiel läßt sich bei einem quader- oder rechteckförmigen Block, der in seiner Längsrichtung abgerieben wird, ein lineares Ausgangssignal als Maß für den Bremsbelagverschleiß erzielen, da sich mit zunehmendem Abrieb des Blockes der Widerstand linear ändert und diese Widerstandsänderung ebenfalls linear dargestellt werden kann. Bei anderen geometrischen Formen des Blockes kann auch bei Einwirkung durch den Bremsbelag (Abrieb) in Abriebsrichtung auf den Block eine andere Kurvenform, vorzugsweise eine exponentiell verlaufende Kurvenform, erzielt werden. Das heißt, dass die Erfindung die Möglichkeit bietet, einen Block vorgebbarer Größe herzustellen und zwischen den beiden Trägern (Kontaktierung) anzuordnen, wobei aufgrund der geometrischen Abmessungen des Blockes, seines Volumens und seines Materials ein Anfangs-Widerstandswert, der zu einem Anfangs-Maß für die Dicke des Bremsbelages darstellt, führt. Mit zunehmendem Abrieb des Bremsbelages, jedes Mal bei Betätigung der Bremse, kommt es auch zu einem Abrieb des Blockes und damit zu einer Änderung des Widerstandswertes. Dadurch sind nicht nur diskontinuierliche Ausgangssignale zu erzielen, die ein Maß darstellen würden, ab dem der Wechsel des Bremsbelages geboten erscheint, sondern es lassen sich kontinuierliche Ausgangssignale (wie z. B. linear steigend, linear fallend, exponentiell steigend, exponentiell abnehmend und andere Kurvenformen) erzeugen, die jeweils ein Maß für den Abrieb des Bremsbelages darstellen und die von einer nachgeschalteten Auswerteelektronik in Abhängigkeit einer darin abgespeicherten Software ausgewertet werden können. Zusammenfassend bedeutet dies, dass die Erfindung mit Hilfe eines Blockes aus einem Widerstandsmaterial vorgebbarer Größe und vorgebbaren Widerstandseigenschaften (insbesondere Widerstandswert) ein kontinuierliches Ausgangssignal erzeugt werden kann, welches in Abhängigkeit der Veränderung der Geometrie (insbesondere des Volumens) des Blockes durch den Abrieb des Bremsbelages ein Maß für den Verschleiß des Bremsbelages darstellt, wobei dieses Ausgangssignal durch die Geometrie des Blockes vorgegeben werden kann und auswertbar ist.

Zur Erzielung eines definierten Anfangs-Ausgangssignals (vor dem Einbau des Sensors in die Bremsanlage) kann ein definierter Widerstandswert durch genaue Einstellung des Volumens bzw. der geometrischen Abmessungen des Sensors erfolgen. Hierbei ist daran zu denken, dass dieser genaue Wert schon mit Herstellung des Sensors (z.B. in einem Spritzgussverfahren, wie vorstehend erwähnt) eingestellt wird oder der hergestellte Sensor durch Einflussnahme, beispielsweise mittels Verdampfen, Wegstanzen, Weglasern oder dergleichen des zwischen den Trägern angeordneten Blockes eingestellt wird. Dies hat darüber hinaus den Vorteil, dass ein einheitlich hergestellter Sensor auch für unterschiedlich dicke Bremsbeläge hergerichtet werden kann.

Insgesamt bietet der erfindungsgemäße Sensor eine hohe Temperaturbeständigkeit, da die verwendeten Materialien für Träger und Block aus entsprechend temperaturbeständigen Materialien bestehen. Außerdem ist ein einfacher Aufbau und eine kostengünstige Realisierung des Sensors gegeben, insbesondere dann, wenn der Sensor in einem Kunststoff-Spritzgussverfahren hergestellt wird. Durch Abstimmung der Geometrie des Sensors und der Materialien kann ein beliebiges Ausgangssignal generiert werden. Ist nur ein einziger Block zwischen den Trägern vorhanden, lässt sich damit beispielsweise ein lineares Ausgangssignal erzeugen, das den kontinuierlichen Verschleiß des Bremsbelages darstellt. Ein weiterer Vorteil ist darin zu sehen, dass der erfindungsgemäße Sensor anstelle von bekannten Sensoren eingesetzt werden kann, da sich seine äußere Geometrie nicht ändert bzw. seine äußere Geometrie den bestehenden Sensoren angepasst werde kann. Dies ist insbesondere dann der Fall, wenn der Sensor in vorteilhafter Weise einen Träger und den Block umgebendes und aus einem hitzebeständigen Material bestehendes Gehäuse aufweist. Denn die äußere Form des Gehäuses kann somit der äußeren Form von Sensorengehäusen, die bekannt sind, entsprechen. Alternativ kann daran gedacht werden, dass der Sensor eine, die Träger seitlich umgebende und aus einem hitzebeständigen Material bestehende Gehäuseschicht aufweist. Damit braucht nicht der gesamte Sensor von einem Gehäuse umgeben zu werden, sondern nur diejenigen Stellen an den Trägern, mit denen der Sensor in die Bremsanlage eingebaut wird. Da der Sensor im Regelfall an einem den Bremsbelag tragenden Bremssattel befestigt wird und dieser Bremssattel bei bekannten Bremsanlagen aus einem flachen Material besteht, kann somit in vorteilhafter Weise daran gedacht werden, dass die Träger seitlich die Gehäuseschicht aufweisen, wobei die äußeren Konturen der Gehäuseschicht einer Ausnehmung in dem Bremssattel, in der der Sensor angeordnet wird, entsprechen.

In Weiterbildung der Erfindung ist vorgesehen, dass an jedem Träger eine Leitung angeschlossen ist oder jeder Träger eine Kontaktfläche zum Anschluss einer Gegenkontaktfläche, die am Ende einer Leitung angeschlossen ist, aufweist. Der einfachste Fall ist der Anschluss einer Leitung an den Träger, wobei der elektrische Leiter der Leitung an dem Träger an geeigneter Stelle mit eine geeigneten Verfahren befestigt und elektrisch kontaktiert wird. Ein solches geeignetes Verfahren ist z.B. ein Löt- oder Schweißverfahren, wobei andere Verfahren, mit denen der Leiter an dem Träger befestigt und elektrisch kontaktiert werden kann, auch in Betracht kommen. Alternativ dazu ist vorgesehen, dass der Träger eine Kontaktfläche (z.B. in Form einer punktuellen Beschichtung) aufweist oder selber die Kontaktfläche bildet. Dadurch ist es möglich, den Träger mit einer Gegenkontaktfläche, die am Ende einer Leitung angeschlossen ist, elektrisch zu kontaktieren. Dabei ist jedoch daran zu denken, dass dieser Anschluss über Kontaktfläche am Träger und Gegenkontaktfläche am Ende der Leitung den im Bereich der Bremsanlage herrschenden Umgebungsbedingungen (hohe Temperaturen, Vibrationen, Stöße, Feuchtigkeit und Spritzwasser, chemische Einflüsse z.B. durch Streusalz und dergleichen) genügen muss.

In Weiterbildung der Erfindung sind, in Abriebsrichtung gesehen, hintereinander zumindest zwei Blöcke zwischen den Trägern vorgesehen, wobei die Blöcke elektrisch voneinander getrennt sind. Über die zumindest zwei zwischen den Trägern angeordneten Blöcke wird ein Sensor realisiert, der ein zweistufiges Signal (der ein mehrstufiges Signal bei weiterem Vorhandensein von mehreren Blöcken) generieren kann. Wird z.B. der erste Block, der von der Bremsscheibe abgerieben wird, vollständig abgerieben sein, kann dies ausgewertet und dem Fahrer des Fahrzeuges ein Signal angezeigt werden, das innerhalb einer bestimmten Zeit oder innerhalb einer bestimmten Fahrleistung die Bremsscheiben gewechselt werden sollten. Erst wenn der zweite Block ebenfalls abgerieben ist, kann dem Fahrer erneut signalisiert werden, dass jetzt unbedingt ein Wechsel des Bremsbelages erforderlich ist. Im Falle des zwei- oder mehrstufigen Sensors kann entweder der Widerstand, der gebildet ist von jeweils einem Block zwischen den Trägern, ausgewertet werden, oder anstelle dessen ausgewertet werden, ob zwischen den Trägern überhaupt noch ein Stromfluss möglich ist (wenn der jeweilige Block noch nicht vollständig abgerieben ist) oder kein Stromfluss mehr gegeben ist (nämlich dann, wenn der jeweilige Block vollständig abgerieben ist).

Ausführungsbeispiele der Erfindung, auf die diese jedoch nicht beschränkt ist, sind im Folgenden beschrieben und anhand der Figuren erläutert.

Es zeigen:
- Figuren 1 und 2:: Einen einstufigen Sensor im Schnitt,
- Figur 3:: Prinzipaufbau eines mehrstufigen Sensors.

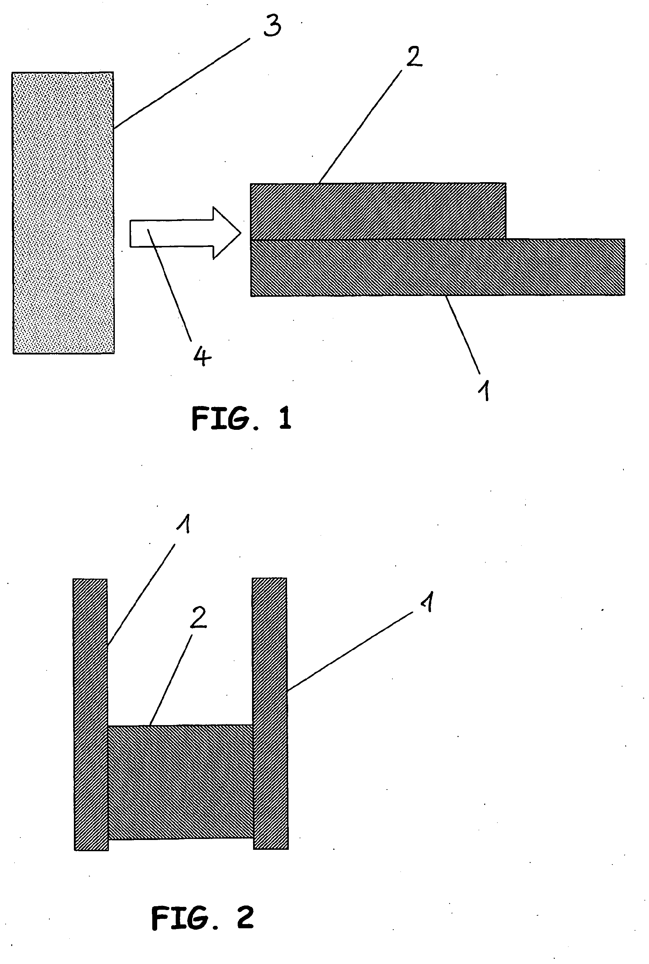

Figur 1 zeigt zwei Träger 1, zwischen denen jeweils ein Block 2 als Funktionsschicht aus einem Widerstandsmaterial angeordnet ist. Der Block 2 ist in geeigneter Weise mit den Trägern 1 verbunden und elektrisch leitend kontaktiert. Nicht dargestellt, aber vorhanden, ist der Anschluss einer Leitung an jeweils einem Träger 1, um beim Abrieb des Blockes 2 (zusammen mit den Trägen 1) eine Widerstandsänderung durch eine nicht dargestellte nachgeschaltete Auswerteelektronik erfassen zu können. Der Abrieb des Sensors erfolgt durch Bewegen einer Bremsscheibe 3, einer nicht näher dargestellten Bremsanlage eines Fahrzeuges in Pfeilrichtung 4. Die geometrischen Formen von Trägern 1, Block 2 und Bremsscheibe 3 in den Figuren 1 und 2 sind lediglich beispielhaft und können im Rahmen der geometrischen Verhältnisse einer Bremsanlage eines Fahrzeuges angepasst werden.

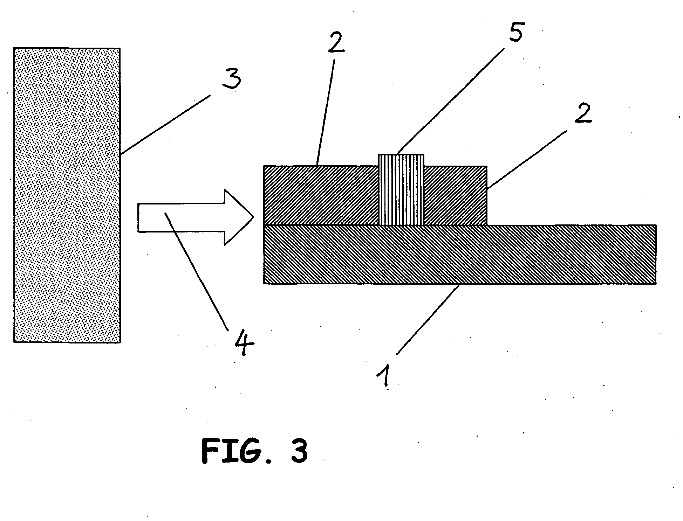

Figur 3 zeigt einen zweistufigen Sensor, wobei erkennbar ist, dass zwischen den Trägern 1 in Abriebsrichtung 4, hintereinander gesehen, zwei Blöcke 2 angeordnet sind, wobei diese beiden Blöcke 2 von einer Trennschicht 5 voneinander getrennt sind. Dadurch wird ein zweistufiger Sensor gebildet, wobei auch mehr als zwei Blöcke hintereinander vorhanden und von einer Trennschicht getrennt sein können, um einen mehrstufigen Sensor, falls gewünscht, zu realisieren. Auch hier gilt, dass die Darstellung in Figur 3 nur prinzipiell erfolgt ist und die geometrischen Verhältnisse, insbesondere auch die geometrische Erstreckung der Träger 1 und der Blöcke 2, den jeweiligen geometrischen Verhältnissen der Bremsanlage und der zu erzeugenden Ausgangsignale angepasst werden können. Die beiden Blöcke 2 gemäß Figur 3 sind analog aufgebaut zu dem Block 2 gemäß Figur 1. Insbesondere können sie aus dem gleichen und/oder unterschiedlichen Material bestehen sowie gleiche oder unterschiedliche Abmessungen (und daraus resultierend gleiche oder unterschiedliche Volumina) aufweisen.

## Patentansprüche

1. Sensor zur Erfassung des Verschleisses eines Bremsbelages einer Bremsanlage eines Fahrzeuges, wobei der in dem Bremsbelag eingebaute Sensor von einer Bremsscheibe (3) der Bremsanlage abgerieben wird und zwischen zwei seitlich angeordneten, aus einem elektrisch leitfähigem Material bestehenden Trägern (1) zumindest ein aus einem Widerstandsmaterial bestehender Block (2) vorgebbarer Größe angeordnet ist, wobei der Block (2) mit den Trägern (1) verbunden und elektrisch leitend kontaktiert ist, **dadurch gekennzeichnet, dass** der Block (2) und/oder die Träger (1) von einem gespritzten hochgefüllten und elektrisch leitfähigen Kunststoff gebildet ist.

2. Sensor nach Anspruch 1, **dadurch gekennzeichnet, dass** der Sensor ein die Träger (1) und den Block (2) umgebendes und aus einem hitzeebständigen Material bestehendes Gehäuse aufweist.

3. Sensor nach Anspruch 1, **dadurch gekennzeichnet, dass** der Sensor eine die Träger (1) seitlich umgebendes und aus einem hitzebeständigen Material bestehende Gehäuseschicht aufweist

4. Sensor nach Anspruch 1, 2 oder 3, **dadurch gekennzeichnet, dass** an dem Träger (1) eine Leitung angeschlossen ist.

5. Sensor nach Anspruch 1, 2 oder 3, **dadurch gekennzeichnet, dass** der Träger (1) eine Kontaktfläche zum Anschluss einer Gegenkontaktfläche, die am Ende einer Leitung angeschlossen ist, aufweist.

6. Sensor nach einem der vorhergehenden Ansprüche, **dadurch gekennzeichnet, dass** in Abriebsrichtung (4) gesehen hintereinander zumindest zwei Blöcke (2) zwischen den Trägern (1) vorgesehen sind, wobei die Blöcke (2) durch eine Trennschicht (5) elektrisch voneinander getrennt sind.

## Claims

1. Sensor for detecting the wear of a brake pad of a brake system of a vehicle, with a brake disc (3) of the brake system rubbing against the sensor which is incorporated in the brake pad, and at least one block (2), which is composed of a resistance material, of predefinable size being arranged between two supports (1) which are arranged at the sides and are composed of an electrically conductive material, with the block (2) being connected to and making electrically conductive contact with the supports (1), **characterized in that** the block (2) and/or the supports (1) is/are formed from an injection-moulded, highly filled and electrically conductive plastic.

2. Sensor according to Claim 1, **characterized in that** the sensor has a housing which surrounds the supports (1) and the block (2) and is composed of a heat-resistant material.

3. Sensor according to Claim 1, **characterized in that** the sensor has a housing layer which laterally surrounds the supports (1) and is composed of a heat-resistant material.

4. Sensor according to Claim 1, 2 or 3, **characterized in that** a line is connected to the support (1).

5. Sensor according to Claim 1, 2 or 3, **characterized in that** the support (1) has a contact area for connection of a mating contact area which is connected to the end of a line.

6. Sensor according to one of the preceding claims, **characterized in that**, as seen in the direction of wear (4), at least two blocks (2) are provided one behind the other between the supports (1), with the blocks (2) being electrical separated from one another by a separating layer (5).

## Revendications

1. Capteur pour déterminer l'usure d'une garniture de frein d'une installation de frein d'un véhicule, dans lequel le capteur incorporé dans la garniture de frein est frotté par un disque de frein (3) de l'installation de frein, et entre deux supports (1) disposés latéralement, constitués d'un matériau électriquement conducteur, est disposé un bloc (2) de taille prédéterminable constitué d'un matériau résistant, le bloc (2) étant connecté aux supports (1) et pouvant être mis en contact électriquement conducteur, **caractérisé en ce que** le bloc (2) et/ou les supports (1) sont formés d'un plastique injecté à forte teneur en charge et électriquement conducteur.

2. Capteur selon la revendication 1, **caractérisé en ce que** le capteur présente un boîtier entourant les supports (1) et le bloc (2) et se composant d'un matériau résistant à la chaleur.

3. Capteur selon la revendication 1, **caractérisé en ce que** le capteur présente une couche de boîtier entourant latéralement les supports (1) et se composant d'un matériau résistant à la chaleur.

4. Capteur selon la revendication 1, 2 ou 3, **caractérisé en ce qu'**une ligne est raccordée au support (1).

5. Capteur selon la revendication 1, 2 ou 3, **caractérisé en ce que** le support (1) présente une surface de contact pour le raccordement d'une surface de contact conjuguée qui est raccordée à l'extrémité d'une ligne.

6. Capteur selon l'une quelconque des revendications précédentes, **caractérisé en ce que** vu dans la direction de frottement (4), au moins deux blocs (2) sont prévus l'un derrière l'autre entre les supports (1), les blocs (2) étant séparés électriquement l'un de l'autre par une couche de séparation (5).
